# EUROPEAN PATENT SPECIFICATION

(11) **EP 4 311 038 B1**
(45) Date of publication and mention of the grant of the patent: **25.02.2026**
(21) Application number: 23185984.4
(22) Date of filing: 18.07.2023
(51) Int. Cl.: G01M 3/28, H01R 13/52, G02B 6/38, H02G 1/10, H01R 13/523, H01R 13/622, H01R 43/00

(54) **CONNECTOR ASSEMBLY**
VERBINDERANORDNUNG
ENSEMBLE CONNECTEUR

(30) Priority: 21.07.2022 GB 202210677
(43) Date of publication of application: 24.01.2024
(73) Proprietor: Siemens Energy Global GmbH & Co. KG, 81739 München (DE)
(72) Inventor: COX, Thomas, Ulverston, LA12 9HJ (GB)
(74) Representative: Isarpatent

(56) References cited:
- EP-B1- 2 929 224
- WO-A2-99/67501

## Description

### FIELD OF INVENTION

The present invention relates to a connector assembly having a rotatory test adaptor for pressure testing. The connector assembly is suitable for use in subsea or other corrosive environments. The connector assembly is suitable for electrical or optical connectors.

### BACKGROUND

When installing a connector into an interface, it is necessary to carry out pressure tests to ensure the seals are properly engaged. Two tests are required; the first to verify that seals on the down hole gauge cable have engaged correctly (a rear seal test) and the second to verify the plug and receptacle are mated correctly and a primary seal is satisfactory (an inter-seal test). The primary seal is an elastomeric seal.

One example of a connector is a dry mate down hole connector of the Applicant's ElecTRON^{®} connector system. This connector is assembled and pressure tested on site, often in difficult environmental conditions such as on the drilling platform of an oil rig.
EP 2929 224 B1 discloses a field testable instrument housing connection whereas WO/9967501A2 discloses a high-pressure hydraulic line connector having connector assemblies which are not suitable for use in subsea environments and installation in difficult environments.

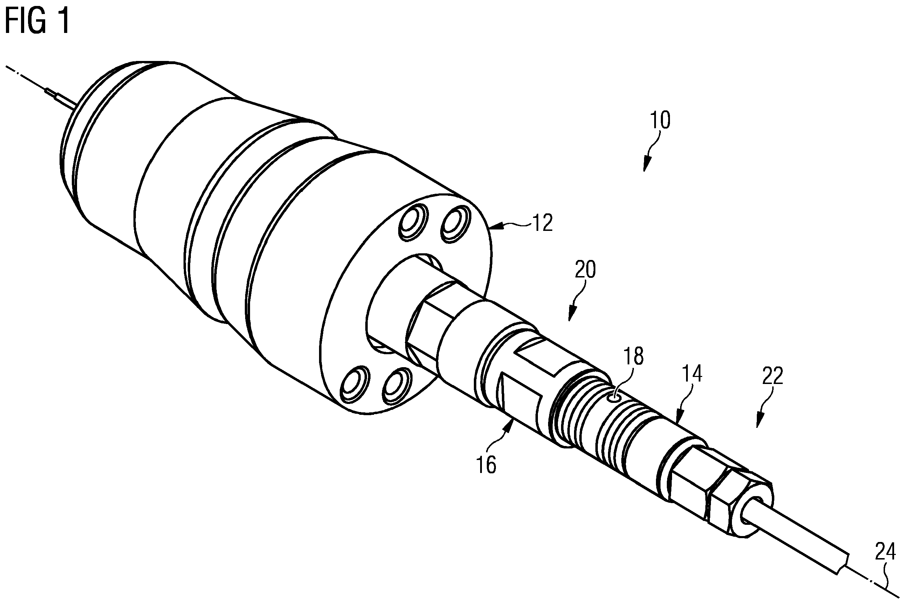

**Figure 1** shows a known dry mate connector pair 10 comprising a dry mate plug 14 and a dry mate receptacle 12. The dry mate receptacle 12 is usually mounted in a customer's interface. A threaded retaining nut 16 secures the dry mate plug 14 and the dry mate receptacle 12 together. The dry mate plug 14 has a test port 18 that is perpendicular to a longitudinal axis of the dry mate connector pair 10. The dry mate connector pair 10 is, as typical in the industry, generally cylindrical and so lacks an orientation feature. This means that the test port 18 can be in any position around 360° of the axis 24 of the connector pair 10. Additionally, a customer may have multiple interfaces located around a large diameter pipe. As such, access to the test port 18 of each of a number of dry mate connector pairs 10 is difficult and can impede carrying out the pressure tests.

The rear seal test and the inter-seal test can be carried out individually and separately or by testing both seals simultaneously. Testing can be carried out using the single test port 18 with complex internal ducting to allow the test port 18 to access the two volumes under test namely the inter-seal, which is the joint, generally indicated by arrow 20, between the dry mate plug 14 and the dry mate receptacle 12, and the rear seals generally located as indicated by arrow 22.

Thus, there is a desire to provide an improved connector assembly for use in subsea environments and installation in difficult environments.

### SUMMARY OF INVENTION

One object of the present invention is to provide a connector that is easier to test for seal integrity. Another object of the present invention is to provide a connector that is simpler and quicker to connect. Another object of the present invention is to provide a connector assembly with an improved primary seal.

The above objects are achieved by a connector assembly (30) for use in subsea environments. The connector assembly comprises a plug (32) and a receptacle (34) generally arranged about a longitudinal axis (36). The plug (32) comprises a plug body (38) through which a down hole gauge cable (40) extends. The receptacle (34) comprises a receptacle body (42) and through which a supply cable (44) extends for connection with the down hole gauge cable (40). The plug (32) and the receptacle (34) are secured together via a securing nut (48). The plug (32) and the receptacle (34) are in contact and form a primary seal (70). A rotary test adaptor (46) is located radially outwardly of and is sealed against an outer surface (110) of the plug body (38) and is located radially inwardly of and is sealed against a radially inner surface (108) of the securing nut (48). A stop (94) is located between the plug body (38) and the securing nut (48). The rotary test adaptor (46) comprises an outer surface (51) and an inner surface (116) and a primary test port (50), the primary test port (50) extends through the rotary test adaptor (46) from the outer surface (51) to the inner surface (116) and is in fluid communication with the primary seal (70). The rotary test adaptor (46) is rotatable about the longitudinal axis and relative to the plug and/or receptacle.

The plug (32) may extend into the receptacle (34). The plug (32) may define a sealing surface (65) and the receptacle (34) may define a sealing surface (67). The sealing surface (65) may be in contact with the sealing surface (67) which forms the primary seal (70),
preferably the receptacle (34) and the plug (32) are metallic, and the primary seal (70) is formed between the metallic sealing surfaces (65, 67).

A secondary seal (72) may be located between a forward end (68) of the receptacle body (42) and a forward end (62) of the plug body (38). The secondary seal (72) may be located downstream, relative to a leakage path between the receptacle body (42) and the plug body (38), of the primary seal (70). The secondary seal (72) may be formed from an elastomeric material.

A first test seal (76) may be located, in a radial direction, between the rotary test adaptor (46) and the plug body (38). A second test seal (80) may be located, in a radial direction, between the rotary test adaptor (46) and the securing nut (48). A third test seal (84) may be located, in a radial direction, between the receptacle body (42) and the securing nut (48).

A spacer (92) may be located, in an axial direction, between the rotary test adaptor (46) and the plug body (38).

A stop (94) may be located, in a radial direction, between the plug body (38) and the securing nut (48). The stop (94) may be arranged to limit relative axial movement between the plug body (38) and the securing nut (48).

The stop (94) may be a split ring. A flange (96) may extend radially inwardly from the securing nut (48). The stop (94) may sit in a groove (98) formed in the radially outer surface (110) of the plug body (38). The flange (96) abuts the split ring.

The stop (94) may be a threaded collar (118) which engages with a cooperating thread (120) formed in a radially outer surface (110) of the plug body (38). The flange (96) abuts the threaded collar (118).

The stop (94) may be a bolt or a dowel (112). A threaded hole (100) or a plain hole (100) or a groove (101) is formed in the radially outer surface (110) of the plug body (38). A through-hole (114) is formed in the securing nut (48) and through which the bolt or a dowel (112) passes to engage with the threaded hole (100) or a plain hole (100) or a groove (101).

A first plug seal (54) and a second plug seal (56) may be provided to seal between the plug body (38) and the down hole gauge cable (40). A secondary test port (52) extends generally radially through the plug body (38), having an outlet (104) on the radially inner surface (106) of the plug body 38. The outlet (104) is located between the first plug seal (54) and the second plug seal (56).

In a second aspect of the present invention, there is provided a method of assembling a connector assembly (30) as described above, the method comprises the steps, fitting the first test seal (76) and the second test seal (80) to rotary test adaptor (46), fitting the third test seal (84) to the receptacle body (42), translating the rotary test adaptor (46) onto the plug body (38), translating the securing nut (48) onto plug body (38), fitting the stop (94) to the plug body (38), rotating the securing nut (48) relative to the receptacle body (42) to engage the threaded connection (90) whereby the sealing surface (65) contacts the sealing surface (67) to form the primary seal (70).

The method may comprise the steps, translating the securing nut (48) to contact the stop (94), translating the rotary test adaptor (46) to contact against the securing nut (48), fitting the spacer (92) to the plug body (38).

In a third aspect of the present invention, there is provided a method of pressure testing a connector assembly (30) as described above, wherein the method comprises the steps: rotating the rotary test adaptor (46) such that the primary test port (50) is accessible, securing pressure test apparatus to the primary test port (50), passing a pressurized fluid through the primary test port (50) and into contact with the primary seal (70), determining the primary seal (70) is satisfactorily sealed.

The method of pressure testing a connector assembly (30) may comprise the steps: securing pressure test apparatus to the plug secondary test port (52), passing a pressurized fluid through the plug secondary test port (52), determining whether the primary plug seal (54) and the secondary plug seal (56) are satisfactorily sealed.

### BRIEF DESCRIPTION OF THE DRAWINGS

The above-mentioned attributes and other features and advantages of the present invention and the manner of attaining them will become more apparent and the present technique itself will be better understood by reference to the following description of embodiments of the present technique taken in conjunction with the accompanying drawings, wherein:
**Figure 1** is a view on a known connector and as described above,
**Figure 2** is a view on a first embodiment of the connector assembly and in accordance with the present invention,
**Figure 3** is a section through the first embodiment of the connector assembly and in accordance with the present invention,
**Figure 4** is a partial section through a second embodiment the connector assembly and in accordance with the present invention,
**Figure 5** is a partial section through a third embodiment the connector assembly and in accordance with the present invention.

### DETAILED DESCRIPTION OF INVENTION

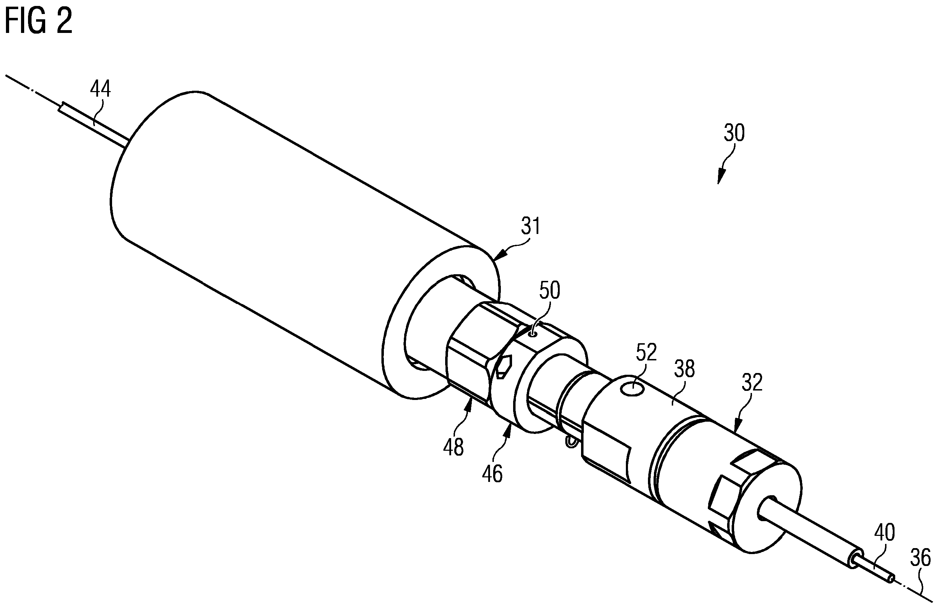

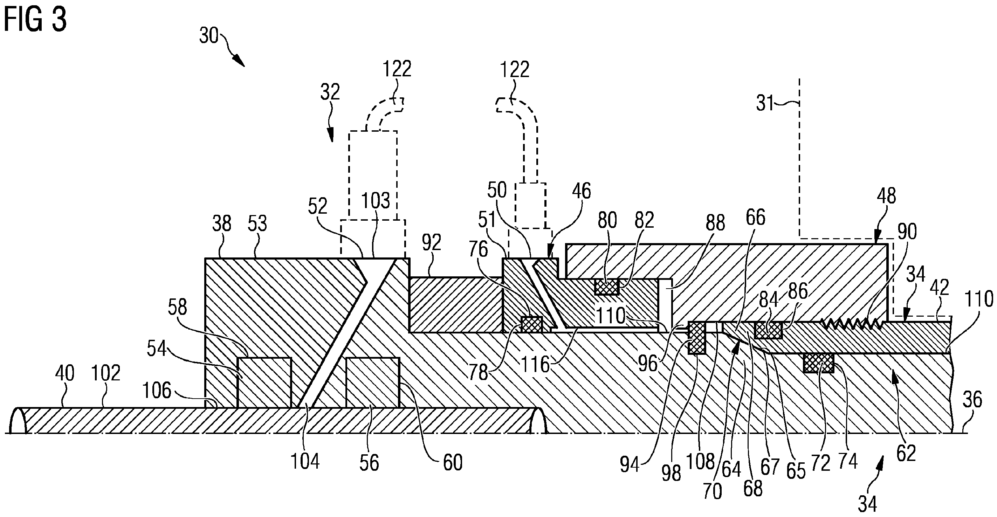

**Figure 2** is a perspective view on a connector assembly 30 in accordance with the present invention. The connector assembly 30 comprises a plug 32 and a receptacle 34 (see Figure 3) generally arranged about a longitudinal axis 36. The receptacle 34 is mounted in a customer's interface 31. The plug 32 and the receptacle 34 are generally elongate along the longitudinal axis 36. The plug 32 comprises a plug body 38 through which a down hole gauge cable 40 extends. The receptacle 34 comprises a receptacle body 42 (see Figure 3) and through which a supply cable 44 extends. The down hole gauge cable 40 and the supply cable 44 are connected by any conventional or future arrangement. A rotary test adaptor 46 sealingly engages on an outer surface of the plug body 38 and sealing engages on an inner surface of a securing nut 48. The rotary test adaptor 46 comprises a primary test port 50, to which pressure test equipment 122 can be attached. The plug body 38 comprises a secondary test port 52, to which pressure test equipment 122 can be attached.

Referring now to **Figure 3** which is a section through the connector assembly 30 of Figure 2. The securing nut 48 is attached to the receptacle body 42, in this example by a threaded connection 90 where a radially outer surface of the receptacle body 42 is threaded to cooperate with a thread on the radially inner surface of the securing nut 48.

A spacer 92 is located between the rotary test adaptor 46 and the plug body 38 to prevent axial movement, in the direction towards the left in Figure 3, of the rotary test adaptor 46. The spacer 92 is a split ring, but in other examples may be two or more circumferential segments attached together by known means such as latches, clips, circlips, overlaps bolted together.

A stop 94 provides an axial position for the securing nut 48 relative to the plug body 38. A flange 96 on the radially inner surface 108 of the securing nut 48 abuts the stop 94 to prevent further movement in the axial direction towards the right in Figure 3. The stop 94 extends radially outwardly from the plug body 38. In this example, the stop 94 is a split ring and which sits in a groove 98 formed in the radially outer surface 110 of the plug body 38.

The plug body 38 has a first plug seal 54 and a second plug seal 56 which seal against the down hole gauge cable 40 and prevent the ingress of fluids to the interior of the connector assembly 30. The two plug seals 54, 56 are metallic and are permanently deformed during installation to cold weld themselves onto the metal sheath (surface 102) of the DHG cable 40.

Generally, the plug 32 extends into the receptacle 34 such that the downhole gauge cable 40 and the supply cable 44 connect together. Specifically, when the plug 32 and the receptacle 34 are connected, a forward end 68 of the receptacle body 42 overlaps or surrounds a forward end 62 of the plug body 38. In this example, the plug body 38 defines a tapered portion 64 and which is generally a truncated cone shape. The receptacle body 42 defines a corresponding tapered portion 66, which is generally a truncated cone shape, in the forward end 68. The two tapered portions 64, 66 define sealing surfaces 65, 67 respectively. The two tapered portions 64, 66 are arranged such that their sealing surfaces 65, 67 respectively are in contact and form a primary seal 70. The primary seal 70 may be formed by other configurations of sealing surfaces of the plug body 38 and receptacle body 42. A secondary seal 72 is located between the forward end 68 of the receptacle body 42 and the forward end 62 of the plug body 38. In this example, the secondary seal 72 is located partly within a groove 74 defined in the forward end 62 of the plug body 38, but in other examples the secondary seal 72 may be located partly within a groove defined in the forward end 68 of the receptacle body 42.

The primary seal 70 prevents the ingress of fluid into the volume immediately surrounding the electrical connection between the downhole gauge cable 40 and the supply cable 44. The secondary seal 72 is a backup seal to the primary seal 70. In terms of potential fluid ingress and leakage path between the receptacle body 42 and the plug body 38, the secondary seal 72 is downstream of the primary seal 70. The secondary seal 72 is an O-ring and is elastomeric or other known deformable material as known in the art.

A first test seal 76 is located between the rotary test adaptor 46 and the plug body 38, the first test seal 76 is located in a groove 78 in the rotary test adaptor 46, but in other embodiments the groove may be formed in the plug body 38. A second test seal 80 is located between the rotary test adaptor 46 and the securing nut 48, the second seal 80 is located in a groove 82 in the rotary test adaptor 46, but in other embodiments the groove 82 may be formed in the securing nut 48. A third test seal 84 is located between the forward end 68 of the receptacle body 42 and the securing nut 48, the third seal 84 is located in a groove 86 in the forward end 68 of the receptacle body 42, but in other embodiments the groove 86 may be formed in the securing nut 48.

The first, second and third test seals 76, 82, 84 are generally O-ring seals and may be formed at least partly from an elastomeric or similar material. These test seals 76, 82, 84 may be disposable after each pressure test and replaced by new test seals for subsequent pressure tests, thereby ensuring good sealing for the pressure tests. These test seals 76, 82, 84 may be formed from hydrogenated nitrile rubber (HNBR) and as such are cost effective.

The rotary test adaptor 46 has a primary test port 50 in its radially outer surface 51. The primary test port 50 is provided to conduct pressure tests for the primary seal 70. A test volume 88 is formed between the rotary test adaptor 46, the securing nut 48, the plug body 38 and the receptacle body 42 and which is sealed by the first, second and third test seals 76, 82, 84 and the primary seal 70. The primary test port 50 is in fluid communication with the test volume 88. It is the intention that the primary seal 70 is tested via a pressurized fluid passed through the primary test port 50 and into the test volume 88 and therefore the pressurised fluid is forced against the primary seal 70.

The primary seal 70 is formed by the plug body 38 and the receptacle body 42 which are both metallic. It is preferable that the primary seal 70 is metallic because the metals used are very capable of resisting the corrosive environment of well bore fluids. The primary seal 70 may be formed of any suitably corrosion resistant material (for example materials which are ISO 15156 compliant) such as Inconel^{®} 625 & 718. The primary seal 70 is otherwise part of a potential leak path from the well bore to the environment and so this seal's reliability is very important.

The plug body 38 defines a secondary test port 52 having an opening 103 in a radially outer surface 53 of the plug body 38. The secondary test port 52 extends generally radially through the plug body 38, having an outlet 104 on the radially inner surface 106 of the plug body 38. The outlet 104 is located between the primary plug seal 54 and the secondary plug seal 56. The secondary test port 52 is provided to conduct pressure tests for the two plug seals 54, 56. It is the intention that the two plug seals 54, 56 are tested via a pressurized fluid passed through the secondary test port 52. The test fluid applies reverse direction pressure to the primary plug seal 54 and in the normal direction pressure to the secondary plug seal 56 as each would experience pressurised fluid in service.

To assemble the first embodiment of the connector assembly comprises the following method steps are undertaken,
- fitting the first test seal 76 and the second test seal 80 to rotary test adaptor 46,
- fitting the third test seal 84 to the receptacle body 42,
- sliding or axially translating the rotary test adaptor 46 onto the plug body 38,
- sliding or axially translating the securing nut 48 onto plug body 38,
- fitting the stop 94 to the plug body 38, in this first embodiment the stop 94 is a split ring and which may be secured via a circlip or similar,
- sliding or axially translating the securing nut 48 to abut or contact the stop 94,
- slide or axially translate the rotary test adaptor 46 against the securing nut 48,
- fitting the spacer 92 to the plug body 38 and secure the spacer 92 to the plug body 38,
- rotating the securing nut 48 relative to the receptacle body 42 to engage the threaded connection 90 whereby the sealing surface 65 contacts the sealing surface 67 to form the primary seal 70.

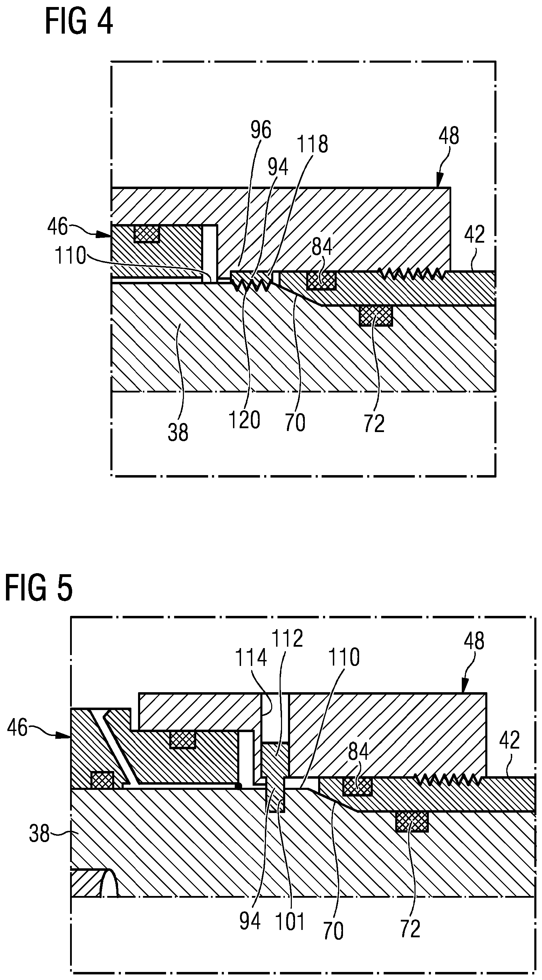

Referring now to **Figure 4****,** a second embodiment of the connector assembly 30 is shown and where like reference numerals are used to denote the same components as shown in Figure 3 unless stated otherwise. Here, instead of the stop 94 being a split collar arrangement, the stop 94 is a threaded collar or ring 118. A cooperating thread 120 is formed in the radially outer surface 110 of the plug body 38 and which is engaged by the corresponding thread on the radially inner surface of the threaded collar 120.

To assemble the second embodiment of the connector assembly 30 the following steps are undertaken,
- fitting the first test seal 76 and the second test seal 80 to rotary test adaptor 46,
- fitting the third test seal 84 to the receptacle body 42,
- sliding or axially translating the rotary test adaptor 46 onto the plug body 38,
- sliding or axially translating securing nut 48 onto plug body 38,
- fitting the stop 94 to the plug body 38, which in this embodiment is a threaded collar; the threaded collar being rotated or screwed onto the corresponding thread on the plug body in the direction from right to left as shown in Figure 4,
- sliding or axially translating the securing nut 48 to abut or contact the stop 94,
- sliding or axially translating the rotary test adaptor 46 against the securing nut 48,
- fitting the spacer 92 to the plug body 38 and secure the spacer 92 to the plug body 38,
- rotating the securing nut 48 relative to the receptacle body 42 to engage the treaded connection 90 whereby the sealing surface 65 contact the sealing surface 67 to form the primary seal 70.

Referring now to **Figure 5****,** a third embodiment of the connector assembly 30 is shown and where like reference numerals are used to denote the same components as shown in Figure 3 unless stated otherwise. Here, instead of the stop 94 being a split collar arrangement, the stop 94 is a bolt or a dowel. A through-hole 114, generally radially aligned, is formed in the securing nut 48 and through which the bolt or a dowel 112 passes to engage with groove 101 respectively formed in the plug body 38. In both cases of the bolt or dowel a number of each may be provided to engage the groove 101 around the circumference of the plug body 38. The bolt or dowel prevents the securing nut 48 and the plug body 38 from relative movement in the axial direction (left or right directions in the Figure) and therefore also prevents relative axial movement between the receptacle 32 and the plug 34. In this embodiment, the spacer 92 of the Figure 3 and 4 embodiments, is not required because the bolt or dowel 112 prevents relative movement in both axial directions.

To assemble the third embodiment of the connector assembly 30 the method comprises the following steps,
- fitting the first test seal 76 and the second test seal 80 to rotary test adaptor 46,
- fitting the third test seal 84 to the receptacle body 42,
- sliding or axially translating the rotary test adaptor 46 onto the plug body 38,
- sliding or axially translating securing nut 48 onto plug body 38,
- fitting the stop 94 to the plug body 38, which in this embodiment is the bolt or dowel by inserting either into the groove 101 in the plug body 38,
- sliding or axially translating the rotary test adaptor 46 against the securing nut 48,
- fitting the spacer 92 to the plug body 38 and secure the spacer 92 to the plug body 38,
- rotating the securing nut 48 relative to the receptacle body 42 to engage the threaded connection 90 whereby the sealing surface 65 contact the sealing surface 67 to form the primary seal 70.

Any of the three embodiments of the pressure testing arrangements, once installed to the connector assembly 30, is pressure tested to ensure that the primary seal 70 and secondary seal 72 are sealing satisfactorily. The method of pressure testing comprises the steps,
- fitting the plug 32 to the receptacle 34,
- where necessary, rotating the rotary test adaptor 46 such that the primary test port 50 is accessible,
- securing pressure test apparatus to the primary test port 50,
- passing the pressurized fluid through the primary test port 50 and into the test volume 88,
- determining the primary seal 70 is satisfactorily sealed.

The pressure test equipment, method of assembling the connector assembly 30 and method of pressure testing means that it is not necessary to orientate the plug 38 or receptacle 34, even if possible, during assembly because the rotary test adaptor 46 may be rotated easily so that the primary test port 50 is easily accessible.

Pressure testing of the first plug seal 54 and the second plug seal 56 may occur before, after or at the same time as pressure testing of the primary seal 70. Indeed, once the plug 32 has been assembled to the downhole gauge cable 40 the pressure testing may be completed. The method of testing the primary plug seal 54 and the secondary plug seal 56 comprises the steps
- securing pressure test apparatus to the plug secondary test port 52,
- passing the pressurized fluid through the plug secondary test port 52,
- determining whether the primary plug seal 54 and the secondary plug seal 56 are satisfactorily sealed.

The plug 32 may be assembled to the downhole gauge cable 40 in any orientation about the axis 36 and therefore the plug secondary test port 52 may be located for ease of access. This pressure testing may be done either or both on site at a customer's location or in the factory.

The pressure test is pressure monitored where a known pressure is applied and then locked off from the pressure generating equipment. The pressure is monitored over a period of time and must not drop more than a specified amount, for example, by no more than 0.25psi over 1 hour. Once the pressure test has been successfully completed, the secondary test port 52 is sealed with a metal seal and the primary test port 50 is left open. The primary test port 50 is left open because if it were sealed, the elastomeric test seals would become primary seals and the metal seal 70 would become a secondary seal which is not desirable.

The presently described pressure testing arrangements has the following benefits:
- provides the customer with a primary metal seal that is tested in the direction that the primary seal will experience in service,
- allows the customer to build the plug 32 in advance without having concerns about the alignment of the plug 32 on the down hole gauge cable 40,
- allows for cheap 'disposable' O-rings to be used for the seals 78, 80 and 84 to create an external sealed area to the primary seal 70 rather than expensive O-rings that can withstand the production environment. These 'disposable' O-rings may be made from a significantly cheaper material such as hydrogenated nitrile rubber (HNBR),
- allows use with the current test method favoured by customers.

## Claims

1. A connector assembly (30) for use in subsea environments comprises a plug (32) and a receptacle (34) generally arranged about a longitudinal axis (36), the plug (32) comprises a plug body (38) through which a down hole gauge cable (40) extends,
the receptacle (34) comprises a receptacle body (42) and through which a supply cable (44) extends for connection with the down hole gauge cable (40),
the plug (32) and the receptacle (34) are secured together via a securing nut (48), the plug (32) and the receptacle (34) are in contact and form a primary seal (70),
**characterized by** a rotary test adaptor (46) rotatable about the longitudinal axis and relative to the plug (32) and/or receptacle (34) is located radially outwardly of and is sealed against an outer surface (110) of the plug body (38) and is located radially inwardly of and is sealed against a radially inner surface (108) of the securing nut (48), a stop (94) located between the plug body (38) and the securing nut (48), the rotary test adaptor (46) comprises an outer surface (51) and an inner surface (116) and a primary test port (50), the primary test port (50) extends through the rotary test adaptor (46) from the outer surface (51) to the inner surface (116) and is in fluid communication with the primary seal (70).

2. A connector assembly (30) as claimed in claim 1, wherein
the plug (32) extends into the receptacle (34), the plug (32) defines a sealing surface (65) and the receptacle (34) defines a sealing surface (67), the sealing surface (65) is in contact with the sealing surface (67) which forms the primary seal (70),
preferably the receptacle (34) and the plug (32) are metallic, and the primary seal (70) is formed between the metallic sealing surfaces (65, 67).

3. A connector assembly (30) according to any of the preceding claims, wherein
a secondary seal (72) is located between a forward end (68) of the receptacle body (42) and a forward end (62) of the plug body (38),
the secondary seal (72) is located downstream, relative to a leakage path between the receptacle body (42) and the plug body (38), of the primary seal (70), preferably the secondary seal (72) is an elastomeric material.

4. A connector assembly (30) according to any of the preceding claims, wherein
a first test seal (76) is located, in a radial direction, between the rotary test adaptor (46) and the plug body (38),
a second test seal (80) is located, in a radial direction, between the rotary test adaptor (46) and the securing nut (48),
a third test seal (84) is located, in a radial direction, between the receptacle body (42) and the securing nut (48).

5. A connector assembly (30) according to any of the preceding claims, wherein
a spacer (92) is located, in an axial direction, between the rotary test adaptor (46) and the plug body (38).

6. A connector assembly (30) according to any of the preceding claims, wherein
the stop (94) is located, in a radial direction, between the plug body (38) and the securing nut (48),
the stop (94) is arranged to limit relative axial movement between the plug body (38) and the securing nut (48).

7. A connector assembly (30) according to any of claims 1 to 6, wherein
the stop (94) is a split ring,
a flange (96) extends radially inwardly from the securing nut (48),
the stop (94) sits in a groove (98) formed in the radially outer surface (110) of the plug body (38),
the flange (96) abuts the split ring.

8. A connector assembly (30) according to any of claims 1 to 6, wherein
the stop (94) is a threaded collar (118) which engages with a cooperating thread (120) formed in a radially outer surface (110) of the plug body (38),
the flange (96) abuts the threaded collar (118).

9. A connector assembly (30) to any of claims 1 to 6, wherein
the stop (94) is a bolt or a dowel (112),
a threaded hole (100) or a plain hole (100) or a groove (101) is formed in the radially outer surface (110) of the plug body (38)
a through-hole (114) is formed in the securing nut (48) and through which the bolt or a dowel (112) passes to engage with the threaded hole (100) or a plain hole (100) or a groove (101).

10. A connector assembly (30) according to any of the preceding claims, wherein,
a first plug seal (54) and a second plug seal (56) are provided to seal between the plug body (38) and the down hole gauge cable (40),
a secondary test port (52) extends generally radially through the plug body (38), having an outlet (104) on the radially inner surface (106) of the plug body 38,
the outlet (104) is located between the first plug seal (54) and the second plug seal (56).

11. A method of assembling a connector assembly (30) according to any of the claims 1 to 10, the method comprises the steps,
fitting the first test seal (76) and the second test seal (80) to rotary test adaptor (46),
fitting the third test seal (84) to the receptacle body (42),
translating the rotary test adaptor (46) onto the plug body (38) such that the primary test port (50) is accessible,
translating the securing nut (48) onto plug body (38),
fitting the stop (94) to the plug body (38),
rotating the securing nut (48) relative to the receptacle body (42) whereby the sealing surface (65) contacts the sealing surface (67) to form the primary seal (70).

12. A method according to claim 11, the method comprises the steps,
translating the securing nut (48) to contact the stop (94),
translating the rotary test adaptor (46) to contact against the securing nut (48), locating a spacer (92), in an axial direction, between the rotary test adaptor (46) and the plug body (38),
fitting the spacer (92) to the plug body (38).

13. A method according to claim 11 or 12, the method comprises the steps,
providing a threaded connection (90) where a radially outer surface of the receptacle body (42) is threaded to cooperate with a thread on the radially inner surface of the securing nut (48),
rotating the securing nut (48) relative to the receptacle body (42) to engage the threaded connection (90) whereby the sealing surface (65) contacts the sealing surface (67) to form the primary seal (70).

14. A method of pressure testing a connector assembly (30) according to any of the claims 1 to 11, wherein the method comprises the steps
rotating the rotary test adaptor (46) such that the primary test port (50) is accessible,
securing pressure test apparatus (122) to the primary test port (50),
passing a pressurized fluid through the primary test port (50) and into contact with the primary seal (70),
determining the primary seal (70) is satisfactorily sealed.

15. A method of pressure testing a connector assembly (30) according to claim 14 for testing a connector assembly according to claim 10, wherein the method comprises the steps
securing pressure test apparatus (122) to the secondary test port (52) before, after or at the same time as pressure testing of the primary seal 70,
passing a pressurized fluid through the secondary test port (52),
determining whether the primary plug seal (54) and the secondary plug seal (56) are satisfactorily sealed.

## Patentansprüche

1. Verbinderanordnung (30) zur Verwendung in Unterwasserumgebungen, die Folgendes umfasst:
einen Stecker (32) und eine im Allgemeinen um eine Längsachse (36) angeordnete Buchse (34), wobei der Stecker (32) einen Steckerkörper (38) umfasst, durch den sich ein Bohrlochmesskabel (40) erstreckt,
die Buchse (34) einen Buchsenkörper (42) umfasst und durch den sich ein Versorgungskabel (44) zur Verbindung mit dem Bohrlochmesskabel (40) erstreckt,
der Stecker (32) und die Buchse (34) über eine Sicherungsmutter (48) miteinander verbunden sind,
der Stecker (32) und die Buchse (34) in Kontakt stehen und eine Primärdichtung (70) bilden,
**dadurch gekennzeichnet, dass**
ein um die Längsachse und relativ zum Stecker (32) und/oder der Buchse (34) drehbarer Drehprüfadapter (46) radial außen von einer Außenfläche (110) des Steckerkörpers (38) angeordnet und gegen diese abgedichtet und radial innen von einer radial inneren Fläche (108) der Sicherungsmutter (48) angeordnet und gegen diese abgedichtet ist,
einen Anschlag (94), der zwischen dem Steckerkörper (38) und der Sicherungsmutter (48) angeordnet ist, wobei der Drehprüfadapter (46) eine Außenfläche (51) und eine Innenfläche (116) sowie eine primäre Prüföffnung (50) umfasst, wobei sich die primäre Prüföffnung (50) durch den Drehprüfadapter (46) von der Außenfläche (51) zur Innenfläche (116) erstreckt und in Fluidkommunikation mit der Primärdichtung (70) steht.

2. Verbinderanordnung (30) nach Anspruch 1, wobei
der Stecker (32) sich in die Buchse (34) hinein erstreckt, der Stecker (32) eine Dichtungsfläche (65) definiert und die Buchse (34) eine Dichtungsfläche (67) definiert, die Dichtungsfläche (65) in Kontakt mit der Dichtungsfläche (67) ist, die die Primärdichtung (70) bildet,
die Buchse (34) und der Stecker (32) vorzugsweise metallisch sind und die Primärdichtung (70) zwischen den metallischen Dichtungsflächen (65, 67) ausgebildet ist.

3. Verbinderanordnung (30) nach einem der vorhergehenden Ansprüche, wobei
eine Sekundärdichtung (72) zwischen einem vorderen Ende (68) des Buchsenkörpers (42) und einem vorderen Ende (62) des Steckerkörpers (38) angeordnet ist,
die Sekundärdichtung (72) relativ zu einem Leckageweg zwischen dem Buchsenkörper (42) und dem Steckerkörper (38) stromabwärts der Primärdichtung (70) angeordnet ist und die Sekundärdichtung (72) vorzugsweise ein elastomeres Material ist.

4. Verbinderanordnung (30) nach einem der vorhergehenden Ansprüche, wobei
eine erste Prüfdichtung (76) in radialer Richtung zwischen dem Drehprüfadapter (46) und dem Steckerkörper (38) angeordnet ist, eine zweite Prüfdichtung (80) in radialer Richtung zwischen dem Drehprüfadapter (46) und der Sicherungsmutter (48) angeordnet ist,
eine dritte Prüfdichtung (84) in radialer Richtung zwischen dem Buchsenkörper (42) und der Sicherungsmutter (48) angeordnet ist.

5. Verbinderanordnung (30) nach einem der vorhergehenden Ansprüche, wobei
ein Abstandshalter (92) in axialer Richtung zwischen dem Drehprüfadapter (46) und dem Steckerkörper (38) angeordnet ist.

6. Verbinderanordnung (30) nach einem der vorhergehenden Ansprüche, wobei
der Anschlag (94) in radialer Richtung zwischen dem Steckerkörper (38) und der Sicherungsmutter (48) angeordnet ist, der Anschlag (94) angeordnet ist, um die relative axiale Bewegung zwischen dem Steckerkörper (38) und der Sicherungsmutter (48) zu begrenzen.

7. Verbinderanordnung (30) nach einem der Ansprüche 1 bis 6, wobei
der Anschlag (94) ein Spaltring ist,
ein Flansch (96) sich von der Sicherungsmutter (48) radial nach innen erstreckt,
der Anschlag (94) in einer Nut (98) sitzt, die in der radial äußeren Oberfläche (110) des Steckerkörpers (38) ausgebildet ist,
der Flansch (96) am Spaltring anliegt.

8. Verbinderanordnung (30) nach einem der Ansprüche 1 bis 6, wobei
der Anschlag (94) ein Gewindebund (118) ist, der mit einem zusammenwirkenden Gewinde (120) in Eingriff steht, das in einer radial äußeren Oberfläche (110) des Steckerkörpers (38) ausgebildet ist,
der Flansch (96) am Gewindebund (118) anliegt.

9. Verbinderanordnung (30) nach einem der Ansprüche 1 bis 6, wobei
der Anschlag (94) eine Schraube oder ein Dübel (112) ist,
eine Gewindebohrung (100) oder eine glatte Bohrung (100) oder eine Nut (101) in der radial äußeren Oberfläche (110) des Steckerkörpers (38) ausgebildet ist,
ein Durchgangsloch (114) in der Sicherungsmutter (48) ausgebildet ist, durch das die Schraube oder ein Dübel (112) verläuft, um in die Gewindebohrung (100) oder eine glatte Bohrung (100) oder eine Nut (101) einzugreifen.

10. Verbinderanordnung (30) nach einem der vorhergehenden Ansprüche, wobei
eine erste Steckerdichtung (54) und eine zweite Steckerdichtung (56) zur Abdichtung zwischen dem Steckerkörper (38) und dem Bohrlochmesskabel (40) bereitgestellt werden,
eine sekundäre Prüföffnung (52) sich allgemein radial durch den Steckerkörper (38) erstreckt und einen Auslass (104) an der radial inneren Oberfläche (106) des Steckerkörpers (38) aufweist,
der Auslass (104) sich zwischen der ersten Steckerdichtung (54) und der zweiten Steckerdichtung (56) befindet.

11. Verfahren zum Zusammenbauen einer Verbinderanordnung (30) nach einem der Ansprüche 1 bis 10, wobei das Verfahren die folgenden Schritte umfasst,
Anbringen der ersten Prüfdichtung (76) und der zweiten Prüfdichtung (80) am Drehprüfadapter (46),
Anbringen der dritten Prüfdichtung (84) am Buchsenkörper (42) Verschieben des Drehprüfadapters (46) auf den Steckerkörper (38), so dass der primäre Prüfanschluss (50) zugänglich ist,
Verschieben der Sicherungsmutter (48) auf den Steckerkörper (38),
Anbringen des Anschlags (94) am Steckerkörper (38),
Drehen der Sicherungsmutter (48) relativ zum Buchsenkörper (42), wodurch die Dichtungsfläche (65) die Dichtungsfläche (67) berührt, um die Primärdichtung (70) zu bilden.

12. Verfahren nach Anspruch 11, wobei das Verfahren die folgenden Schritte umfasst,
Verschieben der Sicherungsmutter (48), um den Anschlag (94) zu berühren,
Verschieben des Drehprüfadapters (46), so dass er an der Sicherungsmutter (48) anliegt,
Positionieren eines Distanzstücks (92) in axialer Richtung zwischen dem Drehprüfadapter (46) und dem Steckerkörper (38), Anbringen des Distanzstücks (92) am Steckerkörper (38).

13. Verfahren nach Anspruch 11 oder 12, wobei das Verfahren die folgenden Schritte umfasst,
Bereitstellen einer Gewindeverbindung (90), bei der eine radial äußere Oberfläche des Buchsenkörpers (42) mit einem Gewinde versehen ist, um mit einem Gewinde auf der radial inneren Oberfläche der Sicherungsmutter (48) zusammenzuwirken,
Drehen der Sicherungsmutter (48) relativ zum Buchsenkörper (42), um in die Gewindeverbindung (90) einzugreifen, wodurch die Dichtungsfläche (65) die Dichtungsfläche (67) berührt, um die Primärdichtung (70) zu bilden.

14. Verfahren zum Druckprüfen einer Verbinderanordnung (30) nach einem der Ansprüche 1 bis 11, wobei das Verfahren die folgenden Schritte umfasst:
Drehen des Drehprüfadapters (46), so dass der primäre Prüfanschluss (50) zugänglich ist,
Befestigen der Druckprüfvorrichtung (122) am primären Prüfanschluss (50)
Leiten eines unter Druck stehenden Fluids durch den primären Prüfanschluss (50) und in Kontakt mit der Primärdichtung (70), Bestimmen, dass die Primärdichtung (70) zufriedenstellend abgedichtet ist.

15. Verfahren zum Druckprüfen einer Verbinderanordnung (30) nach Anspruch 14 zum Testen einer Verbinderanordnung nach Anspruch 10, wobei das Verfahren die folgenden Schritte umfasst:
Befestigen der Druckprüfvorrichtung (122) am sekundären Prüfanschluss (52) vor, nach oder gleichzeitig mit der Druckprüfung der Primärdichtung 70,
Leiten eines unter Druck stehenden Fluids durch den sekundären Prüfanschluss (52),
Bestimmen, ob die primäre Steckerdichtung (54) und die sekundäre Steckerdichtung (56) zufriedenstellend abgedichtet sind.

## Revendications

1. Ensemble connecteur (30) destiné à être utilisé dans des environnements sous-marins, comprenant
une fiche (32) et une prise (34) généralement agencés autour d'un axe longitudinal (36), la fiche (32) comprenant un corps (38) de fiche à travers lequel s'étend un câble (40) de jauge de fond,
le prise (34) comprenant un corps (42) de prise à travers lequel s'étend un câble d'alimentation (44) pour le raccordement avec le câble (40) de jauge de fond,
la fiche (32) et la prise (34) étant fixées l'une à l'autre par l'intermédiaire d'un écrou (48) de fixation,
la fiche (32) et la prise (34) étant en contact et formant un joint primaire (70),
**caractérisé par**
un adaptateur rotatif (46) de test pouvant tourner autour de l'axe longitudinal et par rapport à la fiche (32) et/ou à la prise (34) est situé radialement à l'extérieur et qui est scellé contre une surface extérieure (110) du corps (38) de fiche et est situé radialement vers l'intérieur par rapport à, et est scellé contre, une surface radialement intérieure (108) de l'écrou (48) de fixation,
une butée (94) située entre le corps (38) de fiche et l'écrou (48) de fixation, l'adaptateur rotatif (46) de test comprenant une surface extérieure (51) et une surface intérieure (116) et un orifice primaire (50) de test, l'orifice primaire (50) de test s'étendant à travers l'adaptateur rotatif (46) de test de la surface extérieure (51) à la surface intérieure (116) et étant en communication fluidique avec le joint primaire (70).

2. Ensemble connecteur (30) selon la revendication 1, dans lequel
la fiche (32) s'étend dans la prise (34), la fiche (32) définissant une surface (65) d'étanchéité et la prise (34) définissant une surface (67) d'étanchéité, la surface (65) d'étanchéité est en contact avec la surface (67) d'étanchéité qui forme le joint primaire (70),
de préférence, la prise (34) et la fiche (32) sont métalliques, et le joint primaire (70) est formé entre les surfaces métalliques (65, 67) d'étanchéité.

3. Ensemble connecteur (30) selon l'une quelconque des revendications précédentes, dans lequel
un joint secondaire (72) est situé entre une extrémité avant (68) du corps (42) de prise et une extrémité avant (62) du corps (38) de fiche,
le joint secondaire (72) est situé en aval du joint primaire (70), par rapport à un chemin de fuite entre le corps (42) de prise et le corps (38) de fiche, le joint secondaire (72) étant de préférence un matériau élastomère.

4. Ensemble connecteur (30) selon l'une quelconque des revendications précédentes, dans lequel
un premier joint (76) de test est situé, dans une direction radiale, entre l'adaptateur rotatif (46) de test et le corps (38) de fiche,
un deuxième joint (80) de test est situé, dans une direction radiale, entre l'adaptateur rotatif (46) de test et l'écrou (48) de fixation,
un troisième joint (84) de test est situé, dans une direction radiale, entre le corps (42) de prise et l'écrou (48) de fixation.

5. Ensemble connecteur (30) selon l'une quelconque des revendications précédentes, dans lequel
une entretoise (92) est située, dans une direction axiale, entre l'adaptateur rotatif (46) de test et le corps (38) de fiche.

6. Ensemble connecteur (30) selon l'une quelconque des revendications précédentes, dans lequel
la butée (94) est située, dans une direction radiale, entre le corps (38) de fiche et l'écrou (48) de fixation,
la butée (94) est conçue pour limiter le mouvement axial relatif entre le corps (38) de fiche et l'écrou (48) de fixation.

7. Ensemble connecteur (30) selon l'une quelconque des revendications 1 à 6, dans lequel
la butée (94) est un anneau fendu,
une bride (96) s'étend radialement vers l'intérieur à partir de l'écrou (48) de fixation,
la butée (94) repose dans une gorge (98) formée dans la surface radialement extérieure (110) du corps (38) de fiche,
la bride (96) prend appui contre l'anneau fendu.

8. Ensemble connecteur (30) selon l'une quelconque des revendications 1 à 6, dans lequel
la butée (94) est un collier fileté (118) qui interagit avec un filetage coopérant (120) formé dans une surface radialement extérieure (110) du corps (38) de fiche,
la bride (96) prend appui contre le collier fileté (118).

9. Ensemble connecteur (30) selon l'une quelconque des revendications 1 à 6, dans lequel
la butée (94) est un boulon ou un goujon (112),
un trou fileté (100) ou un trou lisse (100) ou une gorge (101) sont formés dans la surface radialement extérieure (110) du corps (38) de fiche
un trou débouchant (114) est formé dans l'écrou (48) de fixation et le boulon ou un goujon (112) passe à travers celui-ci pour interagir avec le trou fileté (100) ou un trou lisse (100) ou une gorge (101).

10. Ensemble connecteur (30) selon l'une quelconque des revendications précédentes, dans lequel,
un premier joint (54) de fiche et un second joint (56) de fiche sont prévus pour assurer l'étanchéité entre le corps (38) de fiche et le câble (40) de jauge de fond,
un orifice secondaire (52) de test s'étend généralement radialement à travers le corps (38) de fiche, présentant une sortie (104) sur la surface radialement intérieure (106) du corps de fiche 38,
la sortie (104) est située entre le premier joint (54) de fiche et le second joint (56) de fiche.

11. Procédé d'assemblage d'un ensemble connecteur (30) selon l'une quelconque des revendications 1 à 10, le procédé comprenant les étapes,
montage du premier joint (76) de test et du second joint (80) de test sur l'adaptateur rotatif (46) de test,
montage du troisième joint de test (84) sur le corps (42) de prise,
translation de l'adaptateur rotatif (46) de test sur le corps (38) de fiche de telle sorte que l'orifice primaire (50) de test soit accessible,
translation de l'écrou (48) de fixation jusque sur le corps (38) de fiche,
montage de la butée (94) sur le corps (38) de fiche,
rotation de l'écrou (48) de fixation par rapport au corps (42) de prise, la surface (65) d'étanchéité entrant ainsi en contact avec la surface (67) d'étanchéité pour former le joint primaire (70).

12. Procédé selon la revendication 11, le procédé comprenant les étapes,
translation de l'écrou (48) de fixation jusqu'au contact de la butée (94),
translation de l'adaptateur rotatif (46) de test jusqu'au contact de l'écrou (48) de fixation,
positionnement d'une entretoise (92), dans une direction axiale, entre l'adaptateur rotatif (46) de test et le corps (38) de fiche,
montage de l'entretoise (92) sur le corps (38) de fiche.

13. Procédé selon la revendication 11 ou 12, le procédé comprenant les étapes,
réalisation d'un raccordement fileté (90) où une surface radialement extérieure du corps (42) de prise est filetée pour coopérer avec un filetage sur la surface radialement intérieure de l'écrou (48) de fixation,
rotation de l'écrou (48) de fixation par rapport au corps (42) de prise pour interagir avec le raccord fileté (90), la surface (65) d'étanchéité entrant en contact avec la surface (67) d'étanchéité pour former le joint primaire (70).

14. Procédé de test de pression d'un ensemble connecteur (30) selon l'une quelconque des revendications 1 à 11, le procédé comprenant les étapes
rotation de l'adaptateur rotatif (46) de test de telle sorte que l'orifice primaire (50) de test soit accessible,
fixation de l'appareil (122) de test de pression à l'orifice primaire (50) de test,
passage d'un fluide sous pression à travers le port primaire (50) de test et jusqu'au contact du joint primaire (70), détermination du fait que le joint primaire (70) est scellé de manière satisfaisante.

15. Procédé de test de pression d'un ensemble connecteur (30) selon la revendication 14 pour tester un ensemble connecteur selon la revendication 10, le procédé comprenant les étapes
fixation de l'appareil (122) de test de pression à l'orifice secondaire (52) de test avant, après ou en même temps que le test de pression du joint primaire (70),
passage d'un fluide sous pression à travers l'orifice secondaire (52) de test,
détermination selon laquelle le joint primaire (54) et le joint secondaire (56) sont scellés de manière satisfaisante ou non.
